Europäisches Patentamt

European Patent Office

Office européen des brevets

(19)

(11) **EP 0 875 808 A2**

(12) **EUROPÄISCHE PATENTANMELDUNG**

(43) Veröffentlichungstag:
04.11.1998 Patentblatt 1998/45

(51) Int. Cl.⁶: **G05B 17/02**

(21) Anmeldenummer: **98107770.4**

(22) Anmeldetag: **29.04.1998**

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **30.04.1997 DE 19718262**

(71) Anmelder:
**Schenck Panel Production Systems GmbH
64293 Darmstadt (DE)**

(72) Erfinder: **Reine, Frank
64293 Darmstadt (DE)**

(74) Vertreter: **Behrens, Helmut
Im Tiefen See 45 a
64293 Darmstadt (DE)**

(54) **Verfahren und System zur Generierung eines Prozessmodells eines technischen Prozesses**

(57)    Es wird ein Verfahren zum Generieren eines Prozeßmodells eines technischen Prozesses, durch welches einer Anzahl von M Prozeßparametern als Eingangsgrößen eine Anzahl von L Qualitätsmerkmalen als Ausgangsgrößen zugeordnet werden, vorgeschlagen, dabei ist vorgesehen, daß in einem ersten Schritt N Trainingsdatensätze des technischen Prozesses ermittelt werden, die in einem zweiten Schritt während einer Lernphase mit einer Datenprozessoreinrichtung mittels eines vorläufigen Abbildungsmodells, bei welchem parallel zu einem neuronalen Netz mit lokal approximierenden Eigenschaften, welches eine Anzahl von N neuronalen Zellen aufweist, ein lineares Netz geschaltet ist, welches eine gewichtete Linearkombination der M Prozeßparameter durchführt, wobei das lineare und das neuronale Netz einen gemeinsamen Ausgangssummenpunkt besitzen, und daß in einem weiteren Schritt eine Reduktion des neuronalen und des linearen Netzes auf ein Prozeßmodell mit C neuronalen Zellen und M-R gewichteten Linearkombinationen durch Anwendung der Methode der schrittweisen Regression auf das vorläufige Abbildungsmodell erfolgt.

Fig 2

**Beschreibung**

Die Erfindung betrifft ein Verfahren und ein System zum Generieren eines Prozeßmodells eines technischen Prozesses nach dem Oberbegriff des Anspruches 1 bzw. dem Oberbegriff des Anspruches 4.

Prozeßmodelle dienen der Abbildung, Analyse und Optimierung von technischen Prozessen, wobei es sich bei diesen Prozessen sowohl um Produktionsanlagen als auch um einzelne Systemkomponenten oder gar Einzelaggregate handeln kann. In der Regel sollen Prozeßmodelle aus vorgegebenen Eingangsparametern zu erwartende Ausgangsgrößen vorhersagen, sie können als Teil einer Regelung des Prozesses vorgesehen sein.

Bekannte Prozeßmodelle gehen von einem linearen Ansatz aus und werden meist mittels bekannter statistischer Methoden analysiert.

Allerdings können mittels solcher linearer Ansätze komplexe Prozesse mit nichtlinearem Verhalten nicht zufriedenstellend modelliert werden. Daher werden zum Modellieren solcher Prozesse in der Regel nichtlineare Modelle wie beispielsweise neuronale Netze verwendet, die auch komplexe nichtlineare Verhaltensweisen abbilden können.

Zur Parameteridentifikation solcher nichtlinearer Modelle müssen daher nichtlineare Optimierungsalgorithmen verwendet werden, die mit einem extrem hohen Rechenaufwand, insbesondere in der Lernphase verbunden sind. Eine besondere Schwierigkeit stellt auch die Bildung der neuronalen Netzstruktur, also die Wahl der Anzahl der einzelnen neuronalen Zellen und ihrer netzartigen Verbindungen dar.

Der Erfindung liegt daher die Aufgabe zugrunde, ein gattungsgemäßes Verfahren bzw. System zum Generieren eines Prozeßmodells zu schaffen, welches in der Lage ist, mit vergleichsweise geringem Aufwand nichtlineares Verhalten komplexer Systeme zu modellieren und das zur Prozeßsteuerung so eingesetzt werden kann, daß eine Prozeßoptimierung erreicht wird.

Diese Aufgabe wird gemäß der Erfindung durch ein Verfahren nach dem Anspruch 1 bzw. durch ein System nach dem Anspruch 4 gelöst.

Die Erfindung nutzt sowohl die Fähigkeit neuronaler Netze auch sehr komplexes Prozeßverhalten abbilden zu können als auch die Möglichkeit der Anwendung gesicherter statistischer Verfahren auf ein Prozeßmodell.

Überraschenderweise lassen sich die statistischen Methoden auf die erfindungsgemäße Kombination eines linearen und eines neuronalen Netzes anwenden, obwohl die Übertragung statistischer Aussagen auf neuronale Netze alleine nicht möglich ist.

Eine bevorzugte Ausführungsform der Erfindung sieht vor, daß die neuronalen Zellen nach der Methode der Radial-Basis-Funktionen arbeiten, wobei es besonders vorteilhaft für die Abbildungsqualität des Prozeßmodelles ist, wenn die Radial-Basis-Funktionen vom Gauß-Typ sind. Die Methode der Radial-Basis-Funktionen ist beispielsweise aus J. Moody und C. Darken, "Fast learning in networks of locally tuned processing units", Neural Computation, 1:281-294, 1989 bekannt.

Im folgenden wird die Erfindung anhand des Ausführungsbeispiels, welches sich auf die Optimierung und Prozeßmodellierung eines Herstellungsverfahrens bezieht, näher erläutert, hierzu zeigt

Fig. 1: ein Blockdiagramm;
Fig. 2: eine Darstellung der Struktur des Prozeßmodells gemäß der Erfindung und
Fig. 3: ein Ablaufdiagramm des erfindungsgemäßen Verfahrens

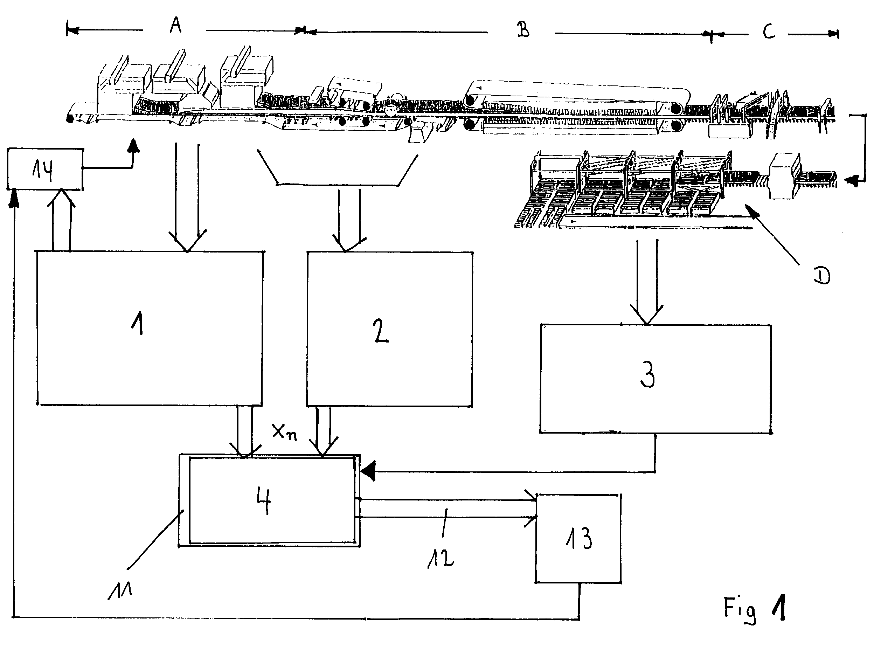

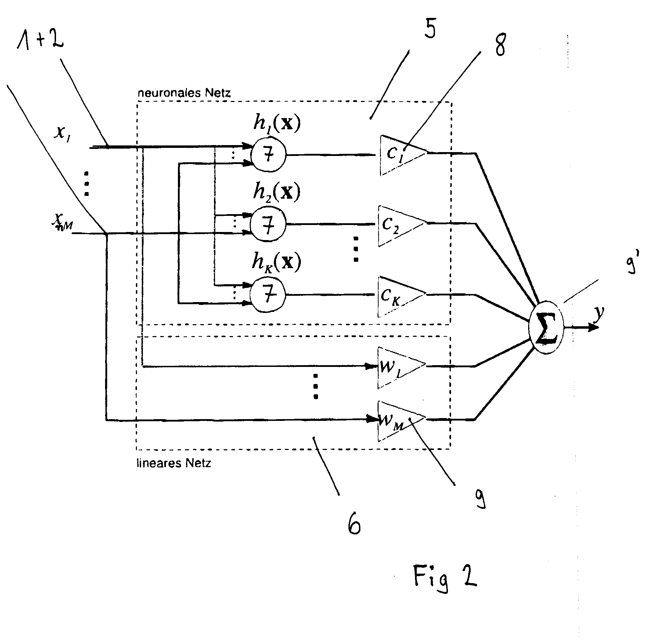

Das erfindungsgemäße Verfahren und das System zur Generierung eines Prozeßmodells eines technischen Prozesses wird beispielhaft in Fig. 1 bei der Herstellung von Spanplatten näher erläutert. Das erfindungsgemäße Verfahren kann zur Analyse von Produktionsprozessen insbesondere zur Vorhersage und Überwachung von Produktqualität und zur Prozeßoptimierung ganz allgemein eingesetzt werden. Es basiert auf einem Prozeßmodell, das aus gemessenen Prozeßparametern gewonnen wird und das zur Vorhersage von Qualitätsmaßen und zur Prozeßsteuerung so eingesetzt wird, daß die Prozeßkosten bei einer gewünschten Produktqualität minimiert werden. Bei dem Herstellungsprozeß von Spanplatten ist es das Ziel, eine gewünschte Produktqualität durch minimalen Einsatz von Resourcen wie Energie, Wasser oder Leimzugabe zu erreichen.

In Fig. 1 ist im oberen Bereich ein Teil einer Anlage zur Spanplattenherstellung dargestellt, wobei in dem Abschnitt A die Hauptpresse, in dem Abschnitt B das Formband und in dem Abschnitt C die Schneidstation dargestellt sind. Die fertigen Spanplatten werden dann dem Abschnitt D zugeführt. Bei der Spanplattenherstellung sind Prozeßparameter zum einen einstellbare Größen 1 wie beispielsweise der Beleimungsfaktor, Bandgeschwindigkeiten, Spanfraktionen, Flüssigkeitsmenge und zum anderen nicht beeinflußbare Größen 2, die durch Messungen ermittelt werden. Derartige Meßwerte sind beispielsweise Temperaturen, Drücke, Pressenweg usw. Diese Prozeßparameter 1 und 2 werden bei der Prozeßmodellbildung als M Eingangsgrößen bezeichnet. Die Qualitätsmerkmale bei der Spanplattehherstellung sind die Eigenschaften der Platten, beispielsweise die Querzugfestigkeit, die Quellung oder die Biegefestigkeit und werden im Labor ermittelt. Die Qualitätsmerkmale 3 werden bei der Prozeßmodellbildung als L Ausgangsgrößen bezeichnet. Sowohl die Qualitätsmerkmale 3 als auch die Prozeßparameter 1 und 2 stellen die zur Prozeßmodellbildung notwendigen Datensätze dar. Das Prozeßmodell 4 hat die Aufgabe, aus den Prozeßparametern = M Eingangsgrößen anhand einer geeigneten Funktion die Qualitätsgrößen = L Ausgangsgrößen zu berechnen. Hierzu werden zunächst in einer Lernphase über einen bestimmten Zeitraum Trainingsdatensätze gesammelt, wobei die Trainingsdatensätze Prozeßparameter und Qualitätsgrößen zu einem bestimmten Zeitpunkt umfassen. Das Prozeßmodell 4 soll einschließlich seiner Struktur mittels einer Anzahl von N Trainingsdatensätzen generiert werden. Die Trainingsdatensätze enthalten eine bereits verifizierte Zuordnung von Eingangswerten zu Ausgangswerten. Dies bedeutet für den N-ten Trainingsdatensatz die Zuordnung der Eingangswerte $x_{n1}$, $x_{n2}$ ..., $n_{xM}$ zu den Ausgangswerten $y_{n1}$, $y_{n2}$ ..., $y_{nL}$. Diese einzelnen Eingangs- bzw. Ausgangswerte lassen sich jeweils zu Eingangsvektoren $x_n$ bzw. Ausgangsvektoren $y_n$ zusammenfassen.

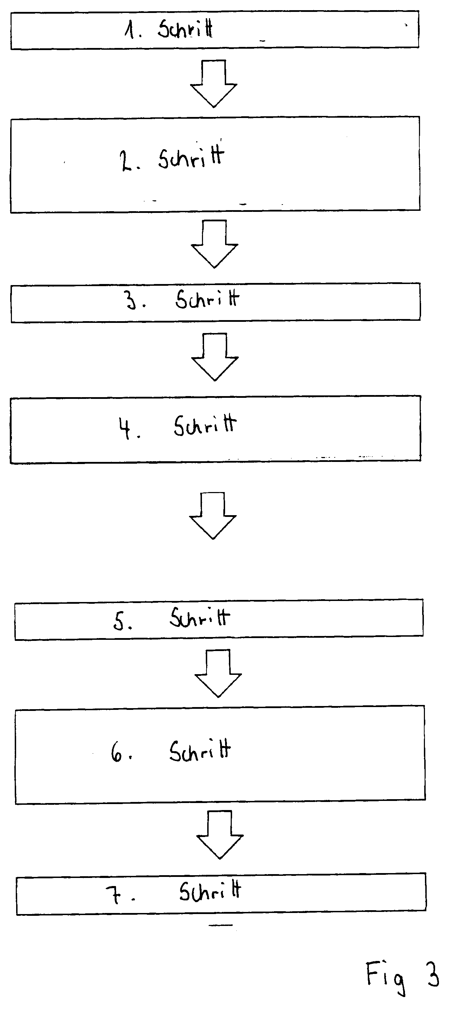

Das in Fig. 2 dargestelle Prozeßmodell 4 setzt sich aus einem neuronalen Netz 5 und einem linearen Netz 6 zusammen. Das neuronale Netz 5 besitzt neuronale Zellen 7, die jeweils miteinander vernetzt sind und denen jeweils sämtliche Prozeßparameter x1 bis xnm zugeführt werden.

Die neuronalen Zellen 7 verarbeiten mit Hilfe von radialen Basisfunktionen den Eingangsvektor zu jeweils einzelnen Aktivierungswerten $h_1$ bis $h_K$.

Eine radiale Basisfunktion ist eine Funktion des Abstandes des Eingangsvektors $X_n$ zu ihrem Basiszentrum $V_K$. Im Anwendungsbeispiel werden radiale Basisfunktionen vom Gauß-Typ und der Euklid'sche Abstand verwendet. Dieser Abstand ergibt sich zu:

$$d_{nk}^2 = \left\| \mathbf{x}_n - \mathbf{v}_k \right\|_2^2 = \sum_{m=1}^{M} \left( x_{nm} - v_{km} \right)^2$$

Die neuronalen Zellen 7 unterscheiden sich hinsichtlich der Basiszentren. Die Aktivierungswerte werden dann aus dem Euklid'schen Abstand und dem Ausdehnungsparameter der Gauß-Funktion berechnet:

$$h_k(\mathbf{x}_n) = \exp\left( -\frac{d_{nk}^2}{r^2} \right)$$

Die Aktivierungswerte des neuronalen Netzes werden nach Durchführung einer Linearkombination der Basisfunktionen zu

$$y_{nl} = \sum_{k=1}^{K} h_k(\mathbf{x}_n) c_{kl}$$

Hierbei sind $c_1$ ... $c_{kl}$ sogenannte Wichtungsfaktoren 8. Diese Aktivierungswerte werden gewichtet durch die Wichtungsfaktoren $c_1$ bis $c_K$ dem Summenpunkt 11 zugeführt.

Parallel zu dem neuronalen Netz ist das lineare Netz 6 angeordnet, welchem ebenfalls die Eingangsgrößen $X_1$ bis $X_M$ zugeführt werden, und welches eine Linearkombination dieser Eingangsgrößen gewichtet durch die Wichtungsfaktoren $w_1$ bis $w_M$ 9 durchführt. Diese gewichteten Signale werden ebenfalls dem gemeinsamen Summenpunkt 9' zugeführt, wodurch sich der l-te Ausgang des kombinierten Netzes zu

$y_{nl}$= Summe der neuronalen Anteile gewichtet + Summe der linearen Anteile gewichtet

$$y_{nl} = \sum_{k=1}^{K} h_k(\mathbf{x}_n) c_{kl} \qquad + \qquad \sum_{m=1}^{M} x_{nm} w_{ml} + w_0$$

ergibt.

Dabei stellt der Ausdruck $w_0$ einen konstanten Term 0. Ordnung des linearen Anteils dar.

Die Wichtungsfaktoren werden mit Hilfe der Methode der kleinsten Fehlerquadrate aus den Trainingsdatensätzen ermittelt. Obwohl die Basiszentren $V_k$ nichtlineare Parameter enthalten, lassen sich überraschenderweise dann statistische Methoden, wie beispielsweise die Methode der kleinsten Fehlerquadrate, zum Lösen verwenden, wenn innerhalb des neuronalen Netzes für jeden der N Trainingsdatensätze jeweils eine neuronale Zelle angesetzt wird. Das Zentrum dieser neuronalen Zelle wird also auf den entsprechenden Eingangsvektor gelegt. Das neuronale Ausgangsmodell besitzt also in der ersten Phase N neuronale Zellen. Jedes Basiszentrum $V_k$ entspricht in dieser Phase einem Eingangsvektor $X_n$. Durch diesen Verfahrensschritt lassen sich alle nichtlinearen Parameter ermitteln und es lassen sich die bekannten statistischen Auswertungsmethoden anwenden.

Dieses Anfangsmodell ist natürlich sehr aufwendig, benötigt zunächst sehr viel Speicherplatz und besitzt zudem offensichtlich eine extrem hohe Varianz, wodurch sich die Probleme der Überadaption ergeben. Dieses Problem wird mit dem folgenden Schritt der schrittweisen Regression gelöst, wodurch nämlich eine sinnvolle Strukturbestimmung durchgeführt wird, was zu einem stark vereinfachten Modell mit einer wesentlich geringeren Anzahl an neuronalen Zellen führt. Dieses Regressionsmodell läßt sich deswegen anwenden, da, wie bereits oben erwähnt, zu diesem Zeitpunkt bereits die nichtlinearen Parameter bekannt sind. Die Methode der schrittweisen Regression ist aus der Literatur, beispielsweise M. J. L. Orr, "Regularization in the selection of radial basis function centres", Neural Computation, 7(3):606-623, 1995 bekannt.

Eine Variante davon ist der sogenannte Forward-Selection-Algorithmus, der zunächst mit einem leeren Regressionsmodell und einer Menge von Basisfunktionen als Kandidaten beginnt, anschließend für jeden verbleibenden Kandidaten die Verringerung des Modellfehlers berechnet, welche durch sein Hinzufügen bewirkt würde, wobei der Kandidat, der die stärkste Fehlerverringerung bewirkt, dem Modell hinzugeführt wird. Aus jedem der Kandidaten der Menge der verbleibenden Restkandidaten wird nun wieder der Modellfehler ermittelt, der durch dessen Hinzufügen bewirkt würde und es wird derjenige nächste Kandidat hinzugefügt, der dann die stärkste Fehlerverringerung bewirken würde. Diese Schritte wiederholen sich, bis ein Abbruchkriterium erreicht wird und die Strukturfindung beendet ist. Das Forward-Selection-Verfahren als solches ist aus S. Chen, C.F.N. Cowan und P. M. Grant, "Orthogonal least squares learning for radial basis function networks", IEEE Trans. Neural Networks, 2(2):302-309, 1991 bekannt.

Als Kandidaten wird eine Menge von auszuwählenden Basisfunktionen verstanden, die für das Prozeßmodell zur Verfügung stehen.

Das Abbruchkriterium berücksichtigt die Veränderung des Auswahlkriteriums als Abschätzung des zu erwartenden Verallgemeinerungsfehlers, vor und nach dem Hinzufügen eines neuen Kandidaten, d. h. einer neuen Basisfunktion und ist an sich aus G. Deco und D. Obradovic, "An Information-Theoretic Approach to Neural Computing" Springer, 1996 bekannt. Steigt das Auswahlkriterium nach dem Hinzufügen einer weiteren Basisfunktion wieder an, so ist dies ein Hinweis darauf, daß das Prozeßmodell in den Überadaptionsbereich gerät und der Auswahlvorgang ist dann an dieser Stelle abzubrechen. Zu diesem Zeitpunkt befinden sich dann lediglich noch K neuronale Zellen 10 samt ihrer Wichtungsfaktoren $c_1$ bis $c_K$ im neuronalen Netz. Da die schrittweise Regression auch über das lineare Netz durchgeführt wird, verringert sich auch die Anzahl der Linearkombinationen der Eingangsparameter und ihrer Wichtungsfaktoren w. Der lineare Teil reduziert sich daher auf M-R Linearkombinationen. Hierbei stellt M die Anzahl der Eingangsgrößen und R die Anzahl der nach der Reduktion wegzulassenden Eingangsgrößen dar.

Die Reduktion des Prozeßmodelles durch die schrittweise Regression vereinfacht die Struktur so enorm, daß sich selbst sehr komplexe Prozesse, zu deren Erlernen eine sehr hohe Anzahl von Trainingsdatensätzen (1000 Trainingsdatensätze und mehr) nötig sind, auf Standard-Personalcomputern darstellen und auch schnell genug berechnen lassen.

Dieses reduzierte Prozeßmodell 4 wird nun in einer Auswerteeinheit 11 abgelegt. Bei dem Herstellungsverfahren für Spanplatten werden dann die beeinflußbaren sowie die nicht beeinflußbaren Prozeßparameter 1 und 2 als Eingangsgrößen bzw. als Eingangsvektor dem in der Auswerteeinheit 11 abgelegten Prozeßmodell 4 zugeführt. Daraus resultierende Ausgangsgrößen L (dargestellt durch Pfeil 12) werden dann einer Auswerteeinheit 13 zugeführt. Die Ausgangsgrößen beschreiben die vorhergesagten Qualitätsgrößen der Spanplatte. In der Auswerteeinheit werden dann mittels eines Optimierungsalgorithmus die beeinflußbaren Prozeßparameter 1 aus den vorhergesagten Qualitätsgrößen berechnet. Durch eine Steuereinrichtung 14 können dann die berechneten Prozeßparameter eingestellt werden.

Anhand vom einem Ablaufdiagramm der Fig. 3 wird das erfindungsgemäße Verfahren in den Schritten 1 bis 7 zusammengefaßt beschrieben:

<u>1. Schritt:</u> Ermitteln von N Trainingsdatensätzen.

<u>2. Schritt:</u> Erstellen eines vorläufigen Prozeßmodells mit N neuronalen Zellen und M linearen Eingängen durch folgende Schritte:

a.) Das neuronale Netz besitzt neuronale Zellen, die mit Hilfe von radialen Basisfunktionen den Eingangsvektor zu jeweils einzelnen Aktivierungswerten verarbeiten.
b.) Linearkombination der Aktivierungswerte gewichtet durch Wichtungsfaktoren wird durchgeführt und diese Werte einem Ausgangssummenpunkt zugeführt.
c.) Parallel zu a.) und b.) wird in dem linearen Netz ein Linearkombination der Eingangsgrößen gewichtet durchgeführt. Die Werte werden anschließend dem Ausgangssummenpunkt zugeführt.

<u>3. Schritt:</u> Reduktion des Prozeßmodells. Ergebnis ist ein Prozeßmodell mit K neuronalen Zellen und M - R linearen Eingängen.

<u>4. Schritt:</u> Ermittlung von aktuellen Prozeßparametern.

<u>5. Schritt:</u> Reduziertes Prozeßmodell ermittelt als Ausgangsgröße zu erwartende Qualitätsmerkmale.

<u>6. Schritt:</u> Optimierungsalgorithmus berechnet die einzustellenden Prozeßparameter.

<u>7. Schritt:</u> Prozßeparameter werden eingestellt.

**Patentansprüche**

1. Verfahren zum Generieren eines Prozeßmodells eines technischen Prozesses, durch welches einer Anzahl von M Prozeßparametern als Eingangsgrößen eine Anzahl von L Qualitätsmerkmalen als Ausgangsgrößen zugeordnet werden, dadurch gekennzeichnet, daß in einem ersten Schritt N Trainingsdatensätze des technischen Prozesses ermittelt werden, die in einem zweiten Schritt während einer Lernphase mit einer Datenprozessoreinrichtung mittels eines vorläufigen Abbildungsmodells, bei welchem parallel zu einem neuronalen Netz mit lokal approximierenden Eigenschaften, welches eine Anzahl von N neuronalen Zellen aufweist, ein lineares Netz geschaltet ist, welches eine gewichtete Linearkombination der M Prozeßparameter durchführt, wobei das lineare und das neuronale Netz einen gemeinsamen Ausgangssummenpunkt besitzen, und daß in einem dritten Schritt eine Reduktion des neuronalen und des linearen Netzes auf ein Prozeßmodell mit K neuronalen Zellen und M-R gewichteten Linearkombinationen durch Anwendung der Methode der schrittweisen Regression auf das vorläufige Abbildungsmodell erfolgt und daß in einem vierten Schritt aktuelle Prozeßparameter ermittelt werden und in einem fünften Schritt dem Prozeßmodell zugeführt werden, welches als Ausgangsgröße zu erwartende Qualitätsmerkmale bestimmt und in einem sechsten Schritt aus diesen berechneten Qualitätsmerkmalen mittels eines Optimierungsalgorithmus die einzustellenden Prozeßparameter ermittelt und diese anschließend in einem siebten Schritt am Prozeß eingestellt werden.

2. Verfahren zum Generieren eines Prozeßmodells eines technischen Prozesses nach Patentanspruch 1, dadurch gekennzeichnet, daß das neuronale Netz aus Radial-Basis-Neuronen besteht und Radial-Basis-Funktionen kombiniert.

3. Verfahren zum Generieren eines Prozeßmodells eines technischen Prozesses nach Patentanspruch 2, dadurch gekennzeichnet, daß die Radial-Basis-Funktionen vom Gauß-Typ sind.

4. System zum Generieren eines Prozeßmodells eines technischen Prozesses anhand von N Trainingsdatensätzen, durch welches einer Anzahl von M Prozeßparametern als Eingangsgrößen eine Anzahl von L Qualitätsmerkmalen als Ausgangsgrößen zugeordnet werden, dadurch gekennzeichnet, daß die Prozeßmodellstruktur ein parallel zu einem neuronalen Netz mit lokal approximierenden Eigenschaften, welches eine Anzahl von K neuronalen Zellen besitzt, geschaltetes lineares Netz aufweist, welches eine gewichtete Linearkombination von höchstens M Prozeßparametern durchführt, wobei das lineare und das neuronale Netz einen gemeinsamen Ausgangssummenpunkt besitzen, wobei K kleiner oder gleich N ist.

Fig 1

A    B    C    D

1

2

3

4

$x_n$

11

12

13

14

EP 0 875 808 A2

Fig 2

1. Schritt

⇓

2. Schritt

⇓

3. Schritt

⇓

4. Schritt

⇓

5. Schritt

⇓

6. Schritt

⇓

7. Schritt

Fig 3